# EUROPEAN PATENT SPECIFICATION

(11) **EP 3 706 032 B1**
(45) Date of publication and mention of the grant of the patent: **10.12.2025**
(21) Application number: 18872453.8
(22) Date of filing: 23.10.2018
(51) Int. Cl.: G06V 40/18, G06V 10/82, G06V 10/774, G06V 10/778, G06V 10/764, G06V 10/44, G06N 3/084, G06N 3/045

(54) **IMAGE CLASSIFICATION METHOD, COMPUTER DEVICE AND COMPUTER READABLE STORAGE MEDIUM**
BILDKLASSIFIZIERUNGSVERFAHREN, COMPUTERVORRICHTUNG UND COMPUTERLESBARES SPEICHERMEDIUM
PROCÉDÉ DE CLASSIFICATION D'IMAGE, DISPOSITIF INFORMATIQUE ET SUPPORT DE STOCKAGE LISIBLE PAR ORDINATEUR

(30) Priority: 01.11.2017 CN 201711060265
(43) Date of publication of application: 09.09.2020
(73) Proprietor: Tencent Technology (Shenzhen) Company Limited, Shenzhen, Guangdong, 518057 (CN)
(72) Inventor: PENG, Pai, Shenzhen Guangdong 518057 (CN); GUO, Xiaowei, Shenzhen Guangdong 518057 (CN); WU, Kailin, Shenzhen Guangdong 518057 (CN)
(74) Representative: Novagraaf International SA
(86) International application number: PCT/CN2018/111491
(87) International publication number: WO 2019/085793

(56) References cited:
- EP-A1- 3 218 076
- EP-B1- 3 218 076
- CN-A- 103 984 959
- CN-A- 105 631 482
- CN-A- 106 295 646
- CN-A- 107 679 525
- US-A1- 2010 086 213
- ANAS ESSA R. ET AL: "Online Eye Status Detection in the Wild with Convolutional Neural Networks :", PROCEEDINGS OF THE 12TH INTERNATIONAL JOINT CONFERENCE ON COMPUTER VISION, IMAGING AND COMPUTER GRAPHICS THEORY AND APPLICATIONS, 1 March 2017 (2017-03-01), pages 88 - 95, XP093137830, ISBN: 978-989-7582-27-1, Retrieved from the Internet <URL:https://pdfs.semanticscholar.org/ef52/f1e2b52fd84a7e22226ed67132c6ce47b829.pdf> [retrieved on 20240305], DOI: 10.5220/0006172700880095
- KRAFKA KYLE ET AL: "Eye Tracking for Everyone", 2016 IEEE CONFERENCE ON COMPUTER VISION AND PATTERN RECOGNITION (CVPR), IEEE, 27 June 2016 (2016-06-27), pages 2176 - 2184, XP033021397, [retrieved on 20161209], DOI: 10.1109/CVPR.2016.239
- GEORGE ANJITH ET AL: "Real-time eye gaze direction classification using convolutional neural network", 2016 INTERNATIONAL CONFERENCE ON SIGNAL PROCESSING AND COMMUNICATIONS (SPCOM), 17 May 2016 (2016-05-17), pages 1 - 5, XP093137858, ISBN: 978-1-5090-1746-1, Retrieved from the Internet <URL:https://arxiv.org/pdf/1605.05258.pdf> [retrieved on 20240305], DOI: 10.1109/SPCOM.2016.7746701

## Description

### Cross-Reference to Related Applications

This application claims priority to Chinese Patent Application No. 201711060265.0, entitled "method for classifying image, device and computer readable storage medium", filed in the Chinese Patent Office on November 1, 2017.

### Technical Field

The application relates to an image processing technology and in particular to a method for classifying an image, a computer device and a computer readable storage medium.

### Background Art

With the wide application of multimedia technology and computer device network, a large amount of image data appears on the network. It becomes increasingly important how these image files can be effectively managed, and how the contents of these images can be automatically recognized and classified.

At present, with the continuous improvement and development of machine learning methods, deep learning algorithm has been paid more and more attention, among which Convolutional Neural Network (CNN) is an important algorithm in deep learning, and has become a hot research topic in the field of image recognition. An image classification technology based on the CNN can automatically extract feature information from an image and express the image through extracted features.

However, when classifying images of different specific fields or different categories based on the CNN, it is often necessary to establish network models corresponding to the fields or categories respectively, and the level and the overall framework included in each network model are determined by means of training. In order to obtain better feature expression capability to acquire better classification precision, especially for the fields with higher requirements on the classification precision, regarding the images of the same field or category, it is usually necessary to obtain more original image data of the same or the same kind as training data to increase the network depth and expand the network scale. Through more training data, the structures of each level of the network model are respectively determined based on the structures of the previous levels before being constructed. As a result, the training mode of the network model is complex, and the image classification precision achieved by the network model after training is unstable.

Anas Essa R. ET AL: "Online Eye Status Detection in the Wild with Convolutional Neural Networks", Proceedings of the 12th International Joint Conference on Computer Vision, Imaging and Computer Graphics Theory and Applications, 1 March 2017, proposes an eye status detection method. The detection is based on a deep learning methodology, where the discriminant function is learned from a large set of exemplar images of eyes at different state, appearance, and 3D position.

### Summary of the Invention

The invention is set out in the claims annexed hereto.

### Brief Description of the Drawings

In order to more clearly explain the embodiment of this application or the technical solutions in the prior art, the drawings needed in the description of the embodiment or the prior art will be briefly introduced as follows. Obviously, the drawings in the following description are only embodiments of the present application, and those skilled in the art can obtain other drawings according to the provided drawings without any creative work.
FIG. 1 is a schematic diagram of an application scenario of a method for classifying an image according to an embodiment of the present application;
FIG. 2 is a flowchart of a method for classifying an image according to an embodiment of the present application;
FIG. 3 is a schematic diagram of a neuron model of a BP neural network according to an embodiment of the present application;
FIG. 4 is a schematic diagram of a BP neural network model according to an embodiment of the present application;
FIG. 5 is a schematic diagram of operation of a convolutional layer operation of a CNN according to an embodiment of the present application;
FIG. 6 is a schematic diagram of a pooling layer of a CNN according to an embodiment of the present application;
FIG. 7 is a flowchart of a method for classifying an image according to an embodiment of the present application;
FIG. 8 is a flowchart of a method for classifying an image according to another embodiment of the present application;
FIG. 9 is a structural schematic diagram of a neural network model according to an embodiment shown in FIG. 8;
FIG. 10 is a schematic diagram of a hardware structure of a computer device according to an embodiment of the present application; and
FIG. 11 is a structural schematic diagram of a computer device according to another embodiment of the present application.

### Detailed Description of the Invention

The technical solutions in the embodiments of the application will be described below clearly and completely with reference to the drawings in the embodiments of the application. Obviously, the described embodiments are only some of the embodiments of the application, and not all of the embodiments.

The present application is described in further detail below with reference to the accompanying drawings and embodiments. It is to be understood that the specific embodiments described herein are merely illustrative of the present application and are not intended to be limiting thereof.

Unless defined otherwise, all technical and scientific terms used herein have the same meaning as commonly understood by one of ordinary skill in the art to which this application belongs. The terms used herein in the Description of the present application are for the purpose of describing specific embodiments only, and are not intended to be limiting of the present application. As used herein, the term "and/or" includes any and all combinations of one or more of the associated listed items.

Before the present application is explained in further detail, the terminologies and terms involved in the embodiments of the present application are explained, and are applicable to the following explanations.
1) An object, as used herein, refers to an object for classification, such as a human and an article.
2) A sample image refers to an image that includes imaging of an object, such as images in various digital formats, e.g., JPEG.
3) Image sharpening (also known as image enhancement) refers to enhancing the imaging characteristic of an object in a sample image by various means, and enlarging distinctiveness of an imaging region of the object from other regions in the sample image.
4) A loss function, also called as cost function, is an object function of neural network optimization.
5) Neural Networks (NNs) are a complex network system formed by a large number of simple processing units (called as neurons) widely connected with each other, which reflect many basic characteristics of human brain functions and is a highly complex nonlinear dynamic learning system.

Embodiments of the present application provide a method for classifying an image, a computer device implementing the method for classifying the image, and a storage medium storing an executable program for implementing the method for classifying the image. With regard to the implementation of the method for classifying the image, the embodiments of the present application provide technical solutions implemented at a terminal side and a server side, and an exemplary implementation scenario of image classification will be described.

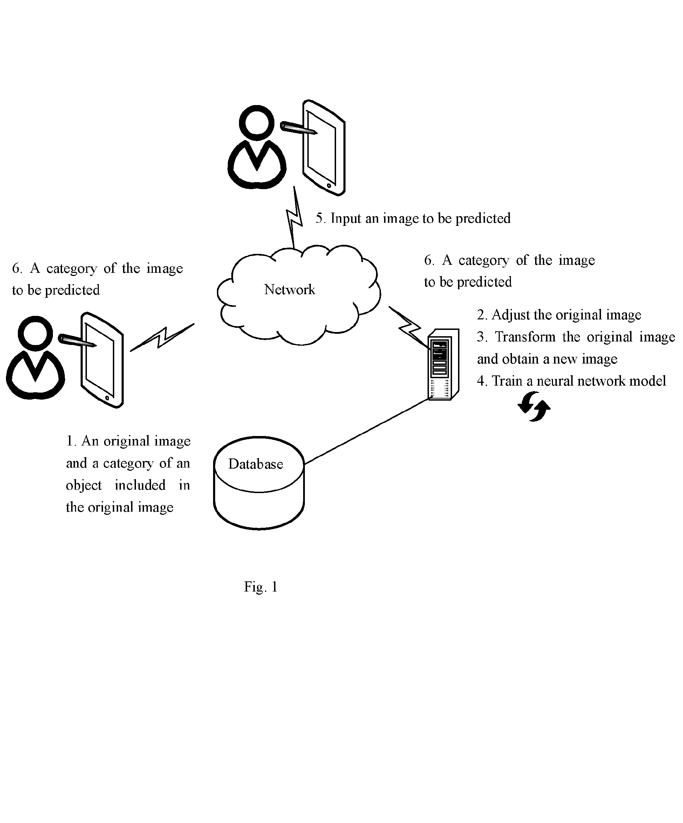

FIG. 1 is a schematic diagram of an application scenario of a method for classifying an image according to an embodiment of the present application, wherein an image classification application implements the method for classifying the image to execute category judgment on the image to be predicted on a server. A user installs an image classification application client in a terminal, inputs an image to be predicted in the image classification application, and a classification result can be obtained after the server executes feature extraction and the category judgment on the image to be predicted. The image classification application determines a neural network model through neural network training with respect to objects contained in different images, identifies the objects contained in the different images respectively and determines the corresponding categories. Taking an object contained in an image being a human face as an example, an image classification application identifies a preset part (an eye or other part) or an overall feature (all features constituting a face) of the human face contained in an image to be predicted and determines a category. The category refers to a dimension for classifying a corresponding object, wherein the dimension of the classification can be an external feature of the object in appearance, such as phoenix eyes and triangular eyes when taking eyes as an example; and the dimension of the classification may also be an inherent feature implied by the appearance of the object, still taking the eye as an example, such as character, age and illness.

In an example, an eye image is taken as an original image. Objects contained in the original image are eyes belonging to five categories of eyes, including phoenix eyes, triangular eyes, willow leaf-shaped eyes, fox eyes and apricot-shaped eyes. A user installs an image classification application client in a terminal, and the eye image to be predicted is input into an image classification application. The server acquires the eye image to be predicted, extracts shape features of eyes from the eye image to be predicted, determines the category of the eyes in the eye image to be predicted as the phoenix eye, the triangular eye, the willow leaf-shaped eye, the fox eye or the apricot-shaped eye according to the similarity between the extracted shape features and the corresponding shape features during category determination when the neural network model is trained, and the category of the eyes is sent to the terminal.

In another example, an eye fundus image is taken as an original image. Objects contained in the original image are eyeballs, and five categories are considered, including normal, mild non-accretive, moderate non-accretive, severe non-accretive, and accretive. A user installs an image classification application client in a terminal, and the eye fundus image to be predicted is input through an image classification application. The server acquires the eye fundus image to be predicted, extracts structural features of the eyeballs in the eye fundus image to be predicted, and determines the category of the eyes in the eye fundus image to be predicted as the normal, mild non-accretive, moderate non-accretive, severe non-accretive, or accretive according to the similarity between the extracted structural features and the corresponding structural features during category determination when the neural network model is trained, and the category of the eyes is sent to the terminal.

The above description of the application scenarios takes the original images as the images of the eyes at the local positions of a human body as examples, but is not limited thereto, and for images in other fields or categories, training the neural network model and predicting the categories of objects included in the images can also be realized by adopting the method for classifying the image according to the embodiment of the present application.

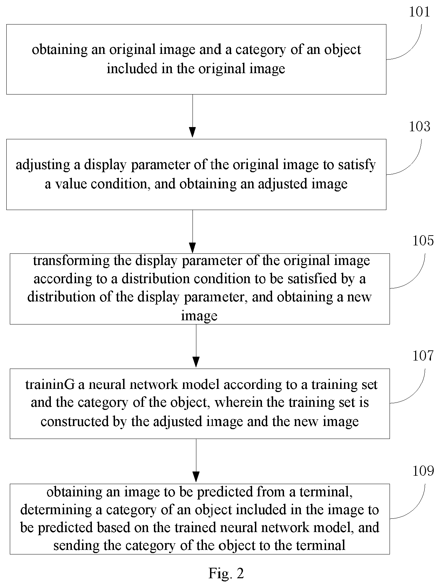

FIG. 2 is an alternative flowchart of a method for classifying an image according to an embodiment of the present application, in which steps will be described separately.

At Step 101, obtaining an original image and a category of an object included in the original image.

The original image refers to a picture taken or drawn for a target of which the category needs to be determined. The object refers to a target of which the category needs to be determined. The category of an object refers to the dimension that needs to classify the target. The category of the object contained in the original image may be predetermined according to the needs to classify the target. In an embodiment, the original image may be collected based on a library of images currently disclosed in the Internet, and the category of the object contained in the original image may be specified according to predetermined categories.

At Step 103, adjusting a display parameter of the original image to satisfy a value condition, and obtaining an adjusted image.

The display parameter of an image refers to numerical information carried by the image that can be used to adjust the display effect of the image. Typically, the display parameter includes the resolution ratio, the size and the color, and in this embodiment, the display parameter of the image primarily includes the direction, the size, the brightness, the contrast ratio, the length-to-width ratio, the resolution ratio, the color, etc. of the image. The value condition refers to a numerical range preset for a corresponding display parameter. By adjusting the display parameter of the original image to satisfy the corresponding preset numerical range, the quality of the image for training the neural network model is improved, and the training speed and the accuracy rate are increased.

At Step 105, transforming the display parameter of the original image according to a distribution condition to be satisfied by a distribution of the display parameter, and obtaining a new image.

The display parameter refers to numerical information carried by an image that can be used to adjust the display effect of the image, mainly including the direction, the size, the brightness, the contrast ratio, the length-to-width ratio, the resolution ratio, the color, etc. of the image. The distribution condition refers to a condition that needs to be satisfied, such as an average distribution, a random distribution and a Gaussian distribution, which is preset for different display parameters. According to the distribution condition to be satisfied by the distribution of the display parameter, the original image is transformed in real time to obtain more new images, thus data amplification is achieved, and the training data for training the neural network model increases.

At Step 107, training a neural network model according to a training set and the category of the object, wherein the training set is constructed by the adjusted image and the new image.

Constructing the training set according to the adjusted image and the new image may include, constructing multiple batches of training sets by taking the adjusted image as a sample image, or constructing multiple batches of training sets by taking the new image as a sample image, or constructing multiple batches of training sets by taking the adjusted image and the new image act jointly as a sample image. By constructing the training set according to the adjusted image and the new image, more effective training sets can be obtained by using relatively less original images, so that higher training precision is obtained. The training sets of different batches are respectively input into the neural network model for training to form a plurality of iterations, and for a single iteration, the training sets used can adopt training sets all constructed by using the original image, or all constructed by using the new image, or all constructed by using both the original image and the new image, so that in one iteration, data in the adopted training sets are subjected to substantially the same processing, thereby avoiding training errors caused by image processing and improving the training precision of the neural network model. For different iterations, the training sets adopted can select any one of the training sets all constructed by using the original image and the training sets all constructed by adopting the new image.

The neural network model may be a neural network model obtained by pre-training based on a known image dataset. The neural network model may be a Back-Propagation (BP) neural network model, a CNN model or a variant thereof.

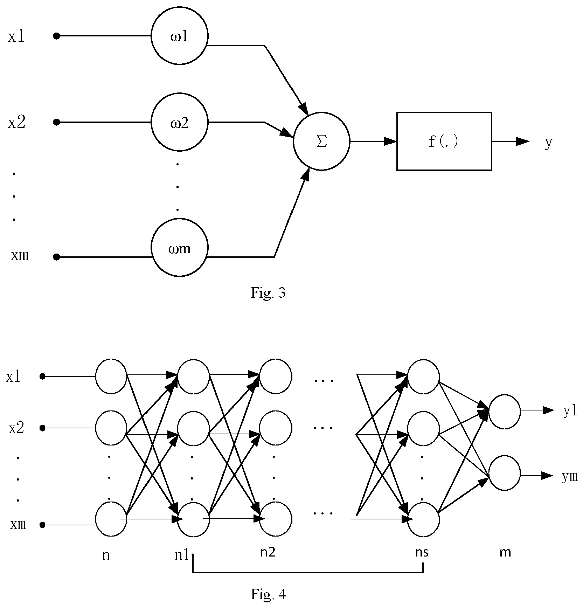

Basic constitutional units of the BP neural network are neurons. As shown in FIG. 3, it is a schematic diagram of a typical neuron model, wherein x1, x2...xm represent inputs, ω1, ω2 and ωm represent synaptic weights, Σ represents a summing node, f(.) represents an activation function, and y represents an output. As shown in FIG. 4, it is a schematic diagram of a neural network model formed by connecting a plurality of neurons according to a certain rule, wherein n corresponds to an input layer, n1-ns correspond to middle layers, and m corresponds to an output layer. As can be seen from FIG. 3 and FIG. 4, the BP neural network model mainly includes an input layer, a hidden layer (middle layer) and an output layer. The number of neurons in the input layer is the same as the number of dimensions of input data, the number of neurons in the output layer is the same as the number of the data to be fitted, and the number of neurons in the hidden layer and the number of the hidden layers may be set according to the actual training target.

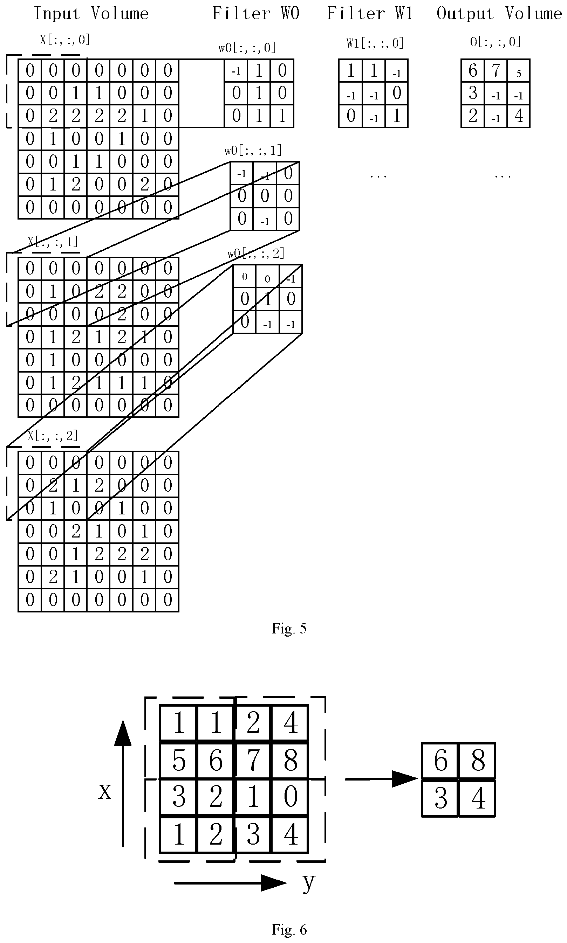

The CNN is a deep learning architecture designed based on inspiration from a biological natural visual cognitive mechanism, mainly including a convolutional layer, a pooling layer and a full-connection layer. The convolutional layer refers to the layer that completes the convolution operation of the image. The convolution operation refers to using a convolution kernel to convolve with a corresponding region of the image to obtain a value, and then continuously moving the convolution kernel and performing convolution. In this way, the convolution of the entire image is achieved. In the CNN, besides the concept of convolution operation, the calculation of the convolutional layer usually involves the concepts of depth and step length. The depth determines the number of neurons in the same region, i.e., several convolution kernels are used to perform convolution operation in the same region, and the step length refers to the number of pixels moved by the convolution kernels. As shown in FIG. 5, it is a schematic diagram illustrating the convolution operation of the convolutional layer, wherein the input layer has a height and width of 7*7 and a depth of 3, there are two filters, each filter has a height and width of 3*3 and a depth of 3 and a convolution kernel has a size of 3*3. A leftmost input layer (Input Volume) is calculated with a first filter (Filter WO): a first layer of the Input Volume is calculated with a first layer of the Filter WO, a second layer of the Input Volume is calculated with a second layer of the Filter WO, a third layer of the Input Volume is calculated with a third layer of the Filter WO. Finally, results of three layers are accumulated to obtain a first result matrix of the output layer (Output Volume). In the same way, the Input Volume is calculated with the second filter (Filter W1) to obtain a second result matrix of the Output Volume. The pooling layer is positioned between the convolutional layers and used for compressing a preset block region of the input data in the previous layer into a value, so that the number of the data and convolutional parameters is reduced gradually, and the over-fitting phenomena is reduced.

As shown in FIG. 6, it is a schematic diagram of operation of the pooling layer. The pooling layer uses a maximum value within a 2*2 region to represent the entire region. The full-connection layer is used for learning, and mapping distributed feature representations in the training set obtained by learning to a sample marking space to obtain a weight of the neural network model.

Training the neural network model mainly includes loading the training set and training model parameters. The loading the training set refers to inputting the training set constructed by the adjusted image and a new image as well as the categories of the relevant objects into an initial neural network model for iterative training, updating parameters in each layer through forward conduction, calculating the cost by using labeled information and a cost function, and backward propagating the cost function in a gradient manner, so that the weight of the initial neural network model is adjusted until a loss function of the neural network model satisfies a convergence condition, thereby a trained neural network model is obtained.

At Step 109, obtaining an image to be predicted from a terminal, determining a category of an object included in the image to be predicted based on the trained neural network model, and sending the category of the object to the terminal.

The image to be predicted is input into the trained neural network model, features contained in the image to be predicted are extracted by the neural network model, the similarity between the extracted features and the features obtained by mapping images corresponding to different categories to the sample marking space in the model training process, and probabilities that the objects contained in the image to be predicted belongs to corresponding categories are determined, thereby the categories of the objects contained in the image to be predicted are determined.

According to the method for classifying the image according to the embodiment of the application, by obtaining an original image and a category of an object included in the original image, adjusting the display parameter of the original image to satisfy the value condition to obtain an adjusted image, and transforming the display parameter of the original image according to a distribution condition to be satisfied by the distribution of the display parameter to obtain a new image, more effective training sets for training the neural network model can be constructed according to the adjusted image and the new image, and classification precision can be stable under the condition that the number of original images in the same field or category is small; and when the training is performed based on the training sets constructed by the adjusted image and the new image as well as the categories of the relevant objects, the training can be performed on the basis of a known neural network model, and after the weights are updated, the trained neural network model is obtained to predict the image to be predicted, so that the training mode is simpler.

In an embodiment, the training the neural network model includes: initializing the neural network model; and inputting images included in the training set and the category of the object into the neural network model, performing iterative training until a loss function of the neural network model satisfies a convergence condition; and obtaining a single neural network model for classifying the image to be predicted.

According to different numbers of objects contained in the image to be predicted, the method for classifying the image according to the embodiment of the application has different modes of training the neural network model, and the obtained neural network models for classifying the image to be predicted are correspondingly different. When the number of the object contained in the image to be predicted is one, initializing the neural network model refers to initializing a parameter of the neural network model so as to construct an initial neural network model. Initializing the parameter of the neural network model mainly includes initializing a connection parameter between layers in the neural network model, that is, a weight of an edge in the neural network.

In an embodiment, initializing the parameter of the neural network model may also include initializing the number of iterations, the batch size, the learning rate, the number of layers of the neural network, etc. when initializing the neural network model. In an embodiment of the application, the initial neural network model may be a neural network model pre-trained based on a pre-trained image data set, such as CNN models including Inception V1, V2, V3, V4 and the like pre-trained on known image data sets such as ImageNet, resNet, VGG, DenseNet and the like. The initial neural network model used when initializing the neural network model is not limited thereto, and may also be any neural network model pre-trained based on other pre-trained image data sets. The training difficulty of the neural network model is greatly simplified by initializing the neural network model and constructing the initial neural network model by using the parameter of the neural network model pre-trained based on the pre-trained image data set; and with the combination of training the initial neural network model according to the training set constructed according to the adjusted image and the new image and the categories of the included objects, the weight is updated, thereby the stability of the classification precision is ensured on the premise of effectively reducing the training difficulty.

When the number of the object contained in the image to be predicted is one, the image included in the training set and the corresponding category are input into the neural network model for iterative training, until a loss function of the neural network model satisfies a convergence condition, thereby a single neural network model is obtained for classifying the image to be predicted. In the embodiment, when obtaining the single neural network model, constructing the initial neural network model by using parameters of the pre-trained neural network model based on the pre-trained image data set specifically includes: constructing the initial neural network model by replacing an original classification layer in the pre-trained neural network model with a softmax classification layer which can achieve n classifications, wherein n refers to the number of categories of the objects contained in the image to be predicted.

During training the neural network model, after the neural network model is initialized, the following will be performed: loading the training set and training the model parameter. The loading the training set includes: inputting the training set constructed by the adjusted image and a new image as well as the categories of the objects into an initial neural network model for iterative training, calculating the cost by using labeled information and a cost function through forward conduction, updating parameters in each layer through a backward propagation cost function in a gradient manner, to adjust the weight of the initial neural network model, until a loss function of the neural network model satisfies a convergence condition, thereby obtaining a final neural network model. The initial neural network model refers to a neural network model before training; and the final neural network model refers to the neural network model after training.

In another alternative embodiment, the method for classifying the image further includes the following step of: combining a K (Kappa) loss function and a multi-classified logarithmic loss function (categorical_crossntropy) according to a preset proportion to obtain a loss function of the neural network model.

The loss function, also called a cost function, is a target function of neural network optimization. The process of training or optimizing a neural network is a process of minimizing the loss function. The smaller the value of the loss function is, the closer the value of the predicted result is to a real result. In a specific embodiment, the K loss function and the multi-classified logarithmic loss function are combined at a preset proportion, such as a 60% K loss function and a 40% multi-classified logarithmic loss function, to form a mixed loss function, so that the softmax classification layer can be supported to achieve higher accuracy on data formed by strong Gaussian noise and some abnormal points with larger amplitudes.

In an embodiment, at the step 109, the judging the category of the object included in the image to be predicted based on the trained neural network model includes: in a single neural network model, extracting an image feature from the image to be predicted, and performing down-sampling on the extracted image feature; and mapping the down-sampled feature to probabilities that the object belong to different categories.

For the single neural network model, the number of the object contained in the image to be predicted is one, the image feature of the object contained in the image to be predicted is extracted by the single neural network model obtained after training, the extracted image feature is down-sampled, the down-sampled feature, namely a feature vector after dimension reduction, is input into the classification layer, and probabilities that the object belongs to different categories are output through the classification layer, so that a classification result of the image to be predicted is obtained.

In another alternative embodiment, the training the neural network model includes: initializing a neural network model; according to at least two objects contained in the original image, initializing a concatenation layer, a full-connection layer and classification layers corresponding to the objects, which are sequentially connected with the neural network model, obtaining a combined neural network model for classifying the image to be predicted; and inputting images included in the training set and the categories of the at least two objects into the combined neural network model, and performing iterative training, until a loss function satisfies a convergence condition.

When the number of the objects contained in the image to be predicted is two or more, initializing the neural network model includes: initializing parameters of the neural network model so as to construct an initial neural network model; and according to the number of objects contained in the image to be predicted (original image), initializing a concatenation layer, a full-connection layer and classification layers corresponding to the objects respectively, which are sequentially connected with the initial neural network model, to construct an initial combined neural network model. The initializing the parameter of the neural network model mainly includes initializing a connection parameter between layers in the neural network model, that is, the weight of an edge in the neural network.

Alternatively, the initializing the parameters of the neural network model may also include initializing the number of iterations, the batch size, the learning rate, the number of layers of the neural network, etc. in the neural network model. In an embodiment of the application, the initial neural network model may be a pre-trained neural network model based on a pre-trained image data set, such as CNN models including Inception V1, V2, V3, V4, which are pre-trained on pre-trained image data sets, such as ImageNet, resNet, VGG, DenseNet; of course, the initial neural network model used in initializing the neural network model is not limited thereto, and may also be any neural network model pre-trained based on other pre-trained image data sets, and the initial neural network model is constructed by utilizing parameters of the neural network model pre-trained on the pre-trained image data sets.

The initial combined neural network model is constructed based on the initial neural network model. The image included in the training set and the corresponding category are input into the initial combined neural network model for iterative training, until a loss function of the combined neural network model satisfies a convergence condition, thereby a final combined neural network model for classifying the image to be predicted is obtained. In the implementation for obtaining the combined neural network model, according to the number of the objects contained in the original image, initializing the concatenation layer, the full-connection layer and the classification layers corresponding to the objects, which are sequentially connected with the neural network model, to obtain the combined neural network model for classifying the image to be predicted specifically includes: sequentially connecting the last convolutional layer of the initial neural network model with the concatenation layer, the full-connection layer and two or more classification layers respectively corresponding to the objects to construct the initial combined neural network model.

In the process of training the neural network model, after the neural network model is initialized, the following will be performed: loading the training set and training model parameters. The loading the training set includes: inputting the training set constructed by the adjusted image and a new image as well as the categories of the objects into an initial neural network model for iterative training, calculating the cost by using labeled information and a cost function through forward conduction, updating parameters in each layer through a backward propagation cost function in a gradient manner, to adjust the weight of the initial neural network model, until a loss function of the neural network model satisfies a convergence condition, thereby obtaining a final neural network model. The initial neural network model refers to a pre-trained neural network model based on a pre-trained image data set; the initial combined neural network model refers to before training, a neural network model that is constructed according to the number of objects contained in the image to be predicted and the initial neural network model; and the final combined neural network model refers to a neural network model after training. Therefore, the neural network model for classifying the image to be predicted is constructed on the basis of the neural network model pre-trained based on the pre-trained image data set, thereby greatly simplifying the construction of the neural network model, making the training mode simpler, and facilitating quickly obtaining a stable classification precision.

It should be noted that when the number of objects included in the image to be predicted is two or more, the two or more objects should refer to the same or symmetrical objects. Taking the image to be predicted being an eye fundus image as an example, an object contained in the eye fundus image can be a left eye or a right eye, so that a combined neural network model can be constructed and trained according to two objects contained in the eye fundus image. In an embodiment, still taking the image to be predicted being an eye fundus image as an example, the objects contained in the eye fundus image are all eyeballs, so that a single neural network model can be constructed and trained according to one object contained in the eye fundus image; or by taking the objects contained in the image to be predicted as the left eye eyeball and the right eye eyeball respectively, a corresponding single neural network model can be constructed and trained.

In an embodiment, at the step 109, determining a category of an object included in the image to be predicted based on the trained neural network model includes: in the combined neural network model, utilizing the combined neural network model to extract image features from the image to be predicted which includes at least two objects; cascading the extracted image features and performing down-sampling on the cascaded image features; and mapping the down-sampled image features to probabilities that each of the at least two objects belong to different categories.

For the combined neural network model, the number of the objects contained in the image to be predicted is two or more, the image features of the objects contained in the image to be predicted are extracted by the combined neural network model obtained after training, the image features of the two or more objects are cascaded by a concatenation layer, the extracted image features are down-sampled by a full-connection layer, and the down-sampled features, namely feature vectors after dimension reduction, are respectively input into classification layers corresponding to the two or more objects, and probabilities that an object belongs to different categories are output by the corresponding classification layer, so that a classification result of the image to be predicted is obtained.

In another embodiment, at the step 103, the adjusting the display parameter of the original image to satisfy the value condition, and obtaining the adjusted image includes: detecting imaging regions of objects included in the original image; and adjusting the size of the original image until the sizes of the imaging regions of the objects included in the original image are consistent.

The size is taken as a display parameter of an original image, and the size of an imaging region of an object is taken as a value condition. The size of the original image is adjusted to satisfy a condition that the sizes of the imaging regions of the contained objects are consistent, so that the sizes of the objects contained in the original image are consistent. Taking the original image being an eye fundus picture and the objects contained in the original image being eyeballs as an example, the imaging region of the object refers to an imaging region of the eyeball, and the eyeballs in different original eye fundus pictures have the same size, such as 300 pixels, by adjusting the size of the original eye fundus picture. The size of the original image is adjusted to make the sizes of the imaging regions of the objects consistent, so that it is convenient to unify the sizes of the objects contained in the original image, the influence of the sizes of the objects on the training precision when the neural network model is subsequently trained is avoided, and the training error caused by different sizes of the objects is avoided.

In yet another embodiment, at the step 103, the adjusting the display parameter of the original image to satisfy the value condition includes: performing image enhancement processing on each color channel of the original image based on a recognition degree that the original image needs to satisfy.

Image enhancement refers to enhancing useful information in an image to improve the visual effect of the image. The color channel refers to a channel that stores color information of the image. Each image has one or more color channels, each color channel is used for storing information of color elements in the image, and colors in all the color channels are overlaid and mixed to generate colors of pixels in the image. The recognition degree refers to a degree that an image can be clearly recognizable. The image enhancement means may include the following ways: firstly, increasing a contrast ratio, in which a linear function is adopted to transform a gray value of the image; secondly, Gamma correction, in which a nonlinear function (exponential function) is adopted to transform the gray value of the image; thirdly, histogram equalization, in which a histogram of the original image is converted into the image with the probability density of 1 (an ideal case) through an integral probability density function, the contrast ratio is increased, and a specific region is widened through the histogram equalization, so that the whole image is converted into a bright region; fourthly, specification of the histogram, in which the histogram of the original image is converted into a specified histogram according to a result of the histogram equalization, the determination of the histogram of a target image needs to refer to the histogram of the original image, and the histogram of a target image is obtained by using a multi-Gaussian function; fifthly, a homomorphic filter, wherein the gray-scale image f(x, y) of the image can be regarded as consisting of an incident light component i(x, y) and a reflected light component r(x, y): f(x, y)=i(x, y)*r(x, y), the incident light is more uniform, varies small with the spatial position, and occupies a low-frequency component; the reflected light reflects light with very different light intensity due to different object properties and structural features, varies large with the spatial position and occupies a high-frequency component, and the homomorphic filter is designed based on the principle that an image is formed by combining an illumination spectrum and a reflection spectrum; and sixthly, a color image enhancement method based on HSV space, in which RGB images are converted into images in other spaces, for example, the RGB images are converted into images in a HSV space, wherein HSV refers to hue, saturation and brightness respectively, and the enhancement is performed by adjusting the three indexes of the HSV.

Through the first way to the third way, an imaging region of interest, namely an object imaging region where features need to be extracted, can be widened, and a region of no interest, namely a background region where no features need to be extracted, can be compressed, so that an image enhancement effect is achieved. The first way to the fifth way is suitable for performing image enhancement processing on gray images, and the sixth way is suitable for performing image enhancement processing on colored images.

In an embodiment of the application, by taking the color channel as the display parameter of an image, and the preset recognition degree to be satisfied as a value condition, the enhancement processing is performed on each color channel of the original image in an image enhancement manner, so that the overall or local features of the image are emphasized, the original unclear image becomes clear, and the features required to be extracted are emphasized, thereby enlarging the difference between different features in the image. When each color channel of the original image is enhanced in the image enhancement manner, one of the first to sixth image enhancement ways can be selected or more than one ways are combined according to requirements. For example, in a specific embodiment, the performing image enhancement processing on each color channel of the original image according to the recognition degree to be satisfied by the original image includes: performing processing in steps S1 to S3 on each color channel of each pixel in the original image: S1, determining a pixel region range with a preset size by taking a pixel point as a center, determining a color average value in the pixel region range, and obtaining a difference value between a color value of each color channel of each pixel and a color average value; S2, multiplying the difference value by a preset value; and S3, adding a gray value of a preset ratio to each pixel. By obtaining the difference value between the color value of each color channel of each pixel and the color average value of the preset pixel region range, and multiplying the difference value by the preset value, the difference degree between the pixels can be increased, and the training speed when the image is used for training the neural network model is increased. The value range of the preset value can be [1-8], preferably 4, and a preset ratio can be 50%, and the preset value of the gray value specifically is 128. Through the S1-S3 steps, by performing the image enhancement processing on each color channel of the original image, features which do not need to be extracted can be suppressed, the image quality is improved, the information content is enriched, and the interpretation and recognition effects of the original image are enhanced.

In yet another embodiment, at the step 103, the adjusting the display parameter of the original image to satisfy the value condition includes: cutting a non-imaging region of the object in the original image; and adjusting the cut image to conform to a preset size.

The cutting refers to the act of taking the desired part from the integrity. Taking the size as a display parameter of the original image and taking the overall size of the image conforming to a preset size as a value condition, the non-imaging region of the original image is cut, so that the size of the original image is consistent with the preset size. Taking the original image being an eye fundus picture and the object contained in the original image being an eyeball as an example, an imaging region of the object refers to an imaging region of an eyeball, and by taking the eyeball as a center, the non-imaging region refers to the region outside the eyeball in the original eye fundus picture. By cutting the non-imaging region, the overall size of the original eye fundus picture after being cut is adjusted to be consistent with the preset size, which makes convenient to unify the sizes of the imaging regions of the objects contained in the original image, the area of a region including no information in the original image is reduced, and when the original image is used for training a neural network model, the training speed and the training precision of the original image are increased and improved.

In an embodiment, the adjusting the display parameter of the original image to satisfy a value condition includes: firstly, adjusting the size of the original image so that the sizes of the imaging regions of the objects are consistent, then performing image enhancement processing on each color channel of the original image, cutting a non-imaging region of the objects in the image, and adjusting the size of the imaging region of the objects in the image before performing the image enhancement processing, so that line features can be relatively highlighted when local features in the image are enhanced through image enhancement; and the sizes of the imaging regions of the objects in the image are adjusted firstly, image enhancement processing is performed, and then cutting is performed, so that the area of the region including no information in the image can be reduced to the greatest extent, and the image processing efficiency is improved.

In another embodiment, at the step 105, transforming the display parameter of the original image according to a distribution condition to be satisfied by the distribution of the display parameter, and obtaining a new image includes: according to a value space wherein at least one category of the display parameter of the original image is located, and a distribution condition that is satisfied in the value space, determining a missing display parameter when comparing the display parameter of the original image with the distribution condition; and transforming the display parameter of the original image to the missing display parameters to obtain the new image.

At least one category of the display parameter of an image may refer to at least one of the direction, the size, the brightness, the contrast ratio, the length-to-width ratio, the resolution ratio, the color, etc. of the image. The value spaces refer to the value ranges corresponding to the display parameters of different categories, and by setting the value space according to the display parameters of different categories, image transformation conditions are set for the image according to the value spaces and the distribution conditions of different display parameters, so that more new images are obtained for training the neural network model.

Taking the category of the display parameter being the direction of the image, the corresponding value space being horizontal overturning or 90-degree overturning, and the distribution condition being average distribution as an example, at the step 105, transforming the display parameter of the original image according to a distribution condition to be satisfied by the distribution of the display parameter, and obtaining a new image specifically includes: according to the direction of the original image contained in one round of training data, with the average distribution being a distribution condition, horizontally overturning or 90-degree overturning the original image with the probability of fifty percent to obtain a new image to form a new round or multiple rounds of training data.

Taking the category of the display parameter being the length-to-width ratio of the image, the corresponding value space being a cutting ratio range of length or width, and the distribution condition being a random distribution as an example, at the step 105, transforming the display parameter of the original image according to a distribution condition to be satisfied by the distribution of the display parameter, and obtaining a new image includes: according to the cutting proportion range of the length-to-width ratio of the original image contained in one round of training data, by taking the random distribution as a distribution condition, randomly cutting the length or width of the original image according to any proportion within the cutting proportion range to obtain a new image to form a new round or rounds of training data. Specifically, the length and width of the original image may be randomly cut by 0% to 15% based on the initial length and width, respectively.

Taking the category of the display parameter being the brightness of the image, the corresponding value space being the brightness increasing and decreasing value range of the image, and the distribution condition being the random distribution as an example, at the step 105, the transforming the display parameter of the original image according to a distribution condition to be satisfied by the distribution of the display parameter, and obtaining a new image specifically includes: according to the brightness increasing and decreasing value range for adjusting the brightness of the original image contained in one round of training data, by taking the random distribution as a distribution condition, randomly increasing the brightness of the original image according to a brightness value within the brightness increasing and decreasing value range to obtain a new image to form a new round or multiple rounds of training data. Specifically, the brightness of the original image may be added with any brightness value within the brightness increasing and decreasing value range, the brightness increasing and decreasing value range may be from minus 10 to 10 cd/m².

Taking the category of the display parameter being the brightness of the image, the corresponding value space being the brightness increasing and decreasing proportion range of the image, and the distribution condition being a random distribution as an example, at the step 105, the transforming the display parameter of the original image according to a distribution condition to be satisfied by the distribution of the display parameter, and obtaining a new image specifically includes: according to the brightness increasing and decreasing proportion range of the original image contained in one round of training data, by taking random distribution as the distribution condition, randomly increasing the brightness of the original image by a proportion within the brightness increasing and decreasing proportion range to obtain a new image to form a new round or multiple rounds of training data. Specifically, the brightness of the original image may be adjusted to 75-125% of the initial brightness.

Taking the category of the display parameter being the contrast ratio of the image, the corresponding value space being the contrast ratio increasing and decreasing proportion range of the image, and the distribution condition being random distribution as an example, at the step 105, the transforming the display parameter of the original image according to a distribution condition to be satisfied by the distribution of the display parameter, and obtaining a new image includes: according to the contrast ratio increasing and decreasing proportion range of the original image contained in one round of training data, by taking random distribution as the distribution condition, randomly increasing the brightness of the original image by a proportion within the contrast ratio increasing and decreasing proportion range to obtain a new image to form a new round or multiple rounds of training data. Specifically, the contrast ratio of the original image may be adjusted to 75-125% of an initial contrast ratio.

Taking the category of the display parameter being the size of the image, the corresponding value space being the scaling proportion range of the image, and the distribution condition being a random distribution as an example, at the step 105, the transforming the display parameter of the original image according to a distribution condition to be satisfied by the distribution of the display parameter, and obtaining a new image specifically includes: according to the scaling proportion range of the original image contained in one round of training data, by taking the random distribution as the distribution condition, randomly increasing the original image by a proportion within the scaling proportion range to obtain a new image to form a new round or multiple rounds of training data. Specifically, the original image may be scaled to 90-110% of the original size.

Taking the category of the display parameter being the direction of the image, the corresponding value space being the rotation direction range of the image direction, and the distribution condition being a random distribution as an example, at the step 105, the transforming the display parameter of the original image according to a distribution condition to be satisfied by the distribution of the display parameter, and obtaining a new image specifically includes: according to a rotation direction range for rotating an original image contained in a round of training data, by taking the random distribution as the distribution condition, randomly increasing the original image according to a proportion within the rotation direction range to obtain a new image to obtain a new round or multiple rounds of training data. Specifically, the direction of the original image can be randomly rotated at any angle within a rotation direction range based on the initial direction, and the rotation direction range may be from minus 180 degrees to 180 degrees.

In one embodiment, at the step of transforming the display parameter of the original image according to a distribution condition to be satisfied by the distribution of the display parameter, and obtaining a new image, the category of the display parameter is not limited to the category given in the above embodiments. When transforming the original image to obtain the new image, one or a combination of more of the technical means for transforming the image in the above embodiments can be used to randomly perform any one of the following amplification operations on each round of training data: 1. horizontally overturning the training image by a preset probability value; 2. randomly cutting the width and the height of the original image based on a first proportion range value; 3. randomly performing addition and subtraction operation on the brightness of the original image based on a second proportion range value; 4. randomly performing multiplication and division operation on the brightness of the original image based on a third proportion range value; 5. randomly performing multiplication and division operation on the contrast ratio of the original image based on a fourth proportion range value; 6. randomly scaling the width and the height of the original image based on a fifth scale range value; and 7. randomly rotating the original image based on a sixth proportion range value; and by performing the real-time data amplification operation on each round of training data, more rounds of effective training data for training the neural network model are obtained.

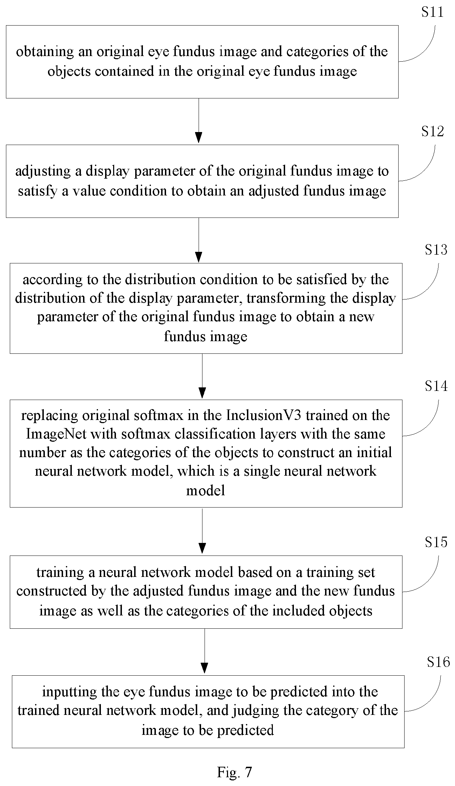

Referring to FIG. 7, taking an original image being an eye fundus image and a single neural network model being trained based on Inception V3 (which is trained on ImageNet) as an example, a method for classifying an image provided by an embodiment of the present application is described as follows.

At S11, obtaining an original eye fundus image and categories of the objects contained in the original eye fundus image. As an alternative, the categories of the objects include five categories that assist in identifying retinopathy features of eyeballs, namely normal, mild non-proliferative, toxic non-proliferative, severe non-proliferative, and proliferative.

At S12, adjusting a display parameter of the original fundus image to satisfy a value condition to obtain an adjusted fundus image. As an alternative, the adjusting the display parameter of the original fundus image to satisfy a value condition includes: scaling the original fundus image so that the eyeballs in the original fundus image have the same radius, such as 300 pixels; subtracting a preset pixel value in a preset pixel region range from each channel of each pixel in the original eye fundus image, multiplying each pixel value by a preset fixed value, and adding a gray value of a preset proportion to each pixel value; cutting a non-imaging region including no information of the original fundus image; and scaling the original fundus image to a preset size, such as 299 pixels in width and 299 pixels in height.

At S13, according to the distribution condition to be satisfied by the distribution of the display parameter, transforming the display parameter of the original fundus image to obtain a new fundus image. As an alternative, the ways for according to the distribution condition to be satisfied by the distribution of the display parameter, transforming the display parameter of the original fundus image includes at least one of the following ways: horizontally turning the original fundus image or the new fundus image at a preset probability value; randomly cutting the width and the height of the original fundus image based on a first proportion range value; randomly performing addition and subtraction operation on the brightness of the original fundus image based on a second proportion range value; randomly performing multiplication and division operation on the brightness of the original fundus image based on a third proportion range value; randomly performing multiplication and division operation on the contrast ratio of the original fundus image based on a fourth proportion range value; randomly scaling the width and the height of the original fundus image based on a fifth proportion range value; and randomly rotating the original fundus image based on a sixth proportion range value.

At S14, replacing original softmax in the InclusionV3 trained on the ImageNet with softmax classification layers with the same number as the categories of the objects to construct an initial neural network model, which is a single neural network model. As an alternative, the softmax classification layers with the same number of the categories of the objects are five categories of classification softmax, to replace the original softmax in the Inception V3 trained on the ImageNet to construct the initial neural network model. In one embodiment, the Inception V3 may be replaced by other neural network models based on an image dataset as described in the previous embodiments of the present application.

At S15, training a neural network model based on a training set constructed by the adjusted fundus image and the new fundus image as well as the categories of the included objects. As an alternative, different batches of training sets constructed according to the adjusted fundus image and the new fundus image are input into an initial neural network model for training, and multiple iterations are performed until a loss function of the neural network model satisfies a convergence condition, so that the trained neural network model is obtained.

At S16, inputting the eye fundus image to be predicted into the trained neural network model, and judging the category of the image to be predicted. As an alternative, a judgment result of the category of the image to be predicted is normal, mild non-accretive, moderate non-accretive, severe non-accretive, or accretive.

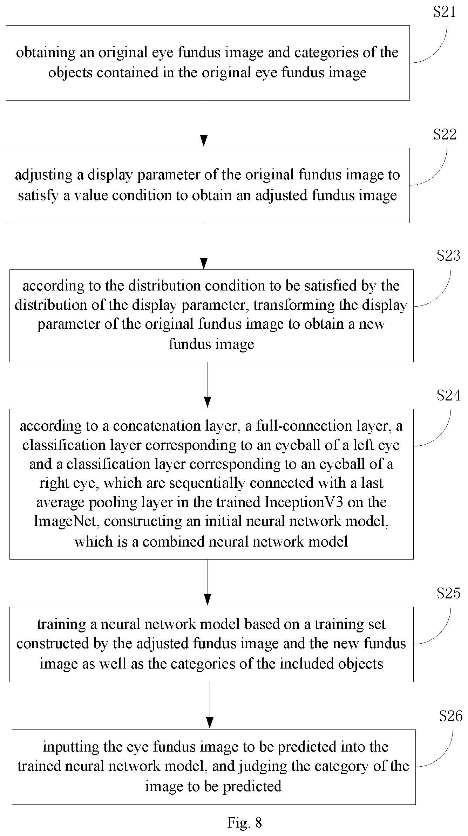

Referring to FIG. 8, taking an original image being an eye fundus image and a single neural network model being trained based on Inception V3 (which is trained on ImageNet) as an example, a method for classifying an image provided by an embodiment of the present application is described as follows.

At S21, obtaining an original eye fundus image and categories of the objects contained in the original eye fundus image. As an alternative, the categories of the objects include five categories that assist in identifying retinopathy features of eyeballs, namely normal, mild non-proliferative, toxic non-proliferative, severe non-proliferative, and proliferative.

At S22, adjusting a display parameter of the original fundus image to satisfy a value condition to obtain an adjusted fundus image. As an alternative, the adjusting the display parameter of the original fundus image to satisfy a value condition includes: scaling the original fundus image so that the eyeballs in the original fundus image have the same radius, such as 300 pixels; subtracting a preset pixel value in a preset pixel region range from each channel of each pixel in the original eye fundus image, multiplying each pixel value by a preset fixed value, and adding a gray value of a preset proportion to each pixel value; cutting a non-imaging region including no information of the original fundus image; and scaling the original fundus image to a preset size, such as 299 pixels in width and 299 pixels in height.

At S23, according to the distribution condition to be satisfied by the distribution of the display parameter, transforming the display parameter of the original fundus image to obtain a new fundus image. As an alternative, the ways for according to the distribution condition to be satisfied by the distribution of the display parameter, transforming the display parameter of the original fundus image includes at least one of the following ways: horizontally turning the original fundus image or the new fundus image at a preset probability value; randomly cutting the width and the height of the original fundus image based on a first proportion range value; randomly performing addition and subtraction operation on the brightness of the original fundus image based on a second proportion range value; randomly performing multiplication and division operation on the brightness of the original fundus image based on a third proportion range value; randomly performing multiplication and division operation on the contrast ratio of the original fundus image based on a fourth proportion range value; randomly scaling the width and the height of the original fundus image based on a fifth proportion range value; and randomly rotating the original fundus image based on a sixth proportion range value.

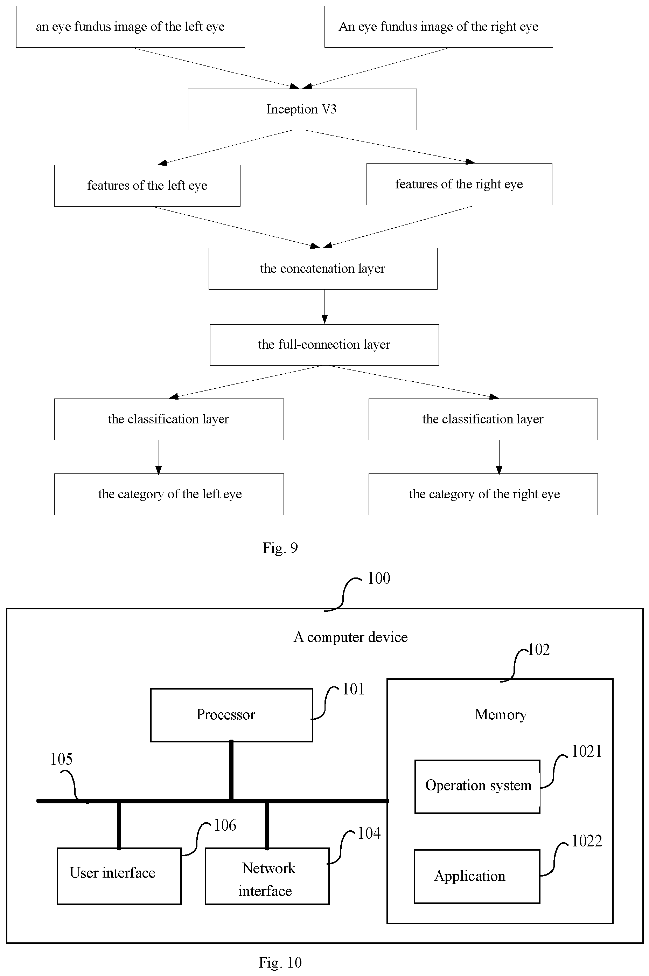

At S24, according to a concatenation layer, a full-connection layer, a classification layer corresponding to an eyeball of a left eye and a classification layer corresponding to an eyeball of a right eye, which are sequentially connected with a last average pooling layer in the trained Inception V3 on the ImageNet, constructing an initial neural network model, which is a combined neural network model as shown in FIG. 9. As will be apparent from the description of the foregoing embodiments of the present application, the InclusionV3 may be replaced by other neural network models based on image data sets.

At S25, training a neural network model based on a training set constructed by the adjusted fundus image and the new fundus image as well as the categories of the included objects. As an alternative, different batches of training sets constructed according to the adjusted fundus image and the new fundus image are input into an initial neural network model for training, and multiple iterations are performed until a loss function of the neural network model satisfies a convergence condition, so that the trained neural network model is obtained.

At S26, inputting the eye fundus image to be predicted into the trained neural network model, and judging the category of the image to be predicted. As an alternative, the combined neural network model uses the same Inception V3 to receive an eye fundus image of the left eye and an eye fundus image of the right eye as inputs respectively, and two feature vectors of the same dimension such as a 2048-dimension are generated through an average pooling layer of the Inception V3. The two feature vectors of the same dimension are cascaded by the concatenation layer to form a feature vector, such as a 4096-dimensional feature vector. Down-sampling is performed through the full-connection layer to obtain a reduced-dimensional feature vector, such as a 512-dimensional feature vector. The dimension-reduced feature vector is respectively input into the classification layer corresponding to the eyeball of the left eye and the classification layer corresponding to the eyeball of the right eye, so that corresponding classification results are respectively obtained. A judgment result of the category of the image to be predicted is normal, mild non-accretive, moderate non-accretive, severe non-accretive, or accretive.

In the above-mentioned methods for classifying the image, all the original images are illustrated by taking an eye fundus image as an example. Since eyes are one of the most important organs of a human body, and a person acquires information outside mainly through eyes, once the person undergoes an eye disease, the vision will be affected in light cases, or even blindness and disability are caused in severe cases. The defect of vision will cause the quality of life of patients to be greatly reduced. Latent eye diseases such as glaucoma and diabetic retinopathy have no symptoms of vision change in the early stage, while fundus photography is an effective method to detect the latent eye diseases in the early stage. The fundus photography is a kind of fundus examination which has been widely used in recent years. It uses a special instrument, such as a digital camera, to connect with an ophthalmoscope to display a fundus image on a computer device, which can not only be printed and stored in a medical record, but also be used for comparison before and after treatment. The method can objectively record retinal morphological changes of the fundus posterior pole, and has good objectivity, repeatability and comparability. Currently, the eye fundus image for eye fundus screening is performed in such a way that an ophthalmologist in a film reading center carries out film reading grading on the eye fundus image, so that patients can be treated early to delay disease progress, thereby realizing the transformation from disease treatment to disease prevention. However, a fundus screening program using the fundus photography typically produces a large number of fundus photographs that need to be graded, most of which are normal retinas, causing most of the time for grading work by ophthalmologists to be consumed in normal fundus photographs without any signs of ocular disease. As a result, the accuracy of classification depends on the individual level of the ophthalmologists reading films, and the classification efficiency is very low. With the method for classifying the image according to the embodiment of the application, the eye fundus image can be efficiently, accurately and automatically classified; the method used is simple; the judgment speed is high; an accurate judgment result can be quickly obtained without professional capability of recognizing the eye fundus image; the classification efficiency of the eye fundus image is conveniently improved; the workload of professionals is greatly reduced; the judgment result does not depend on the professional level of individuals; and the classification precision is high and relatively stable.

In one embodiment, in the above-described embodiment shown in FIG. 7 or FIG. 8, the original image may also be other images containing objects to be classified, and may be suitable for any other application scenarios in which the number of original images for constructing a training set is small when using a neural network model to predict the categories of objects. For example, the objects to be classified are eyes, and the categories of the objects may include five categories of eyes in different shapes: phoenix eyes, triangular eyes, willow leaf-shaped eyes, fox eyes and apricot-shaped eyes; and a corresponding original image is an eye image. Based on the same technical concept as described in the embodiment of FIG. 7 or FIG. 8 above, a single neural network model or a combined neural network model can be constructed as an initial neural network model, display parameters are adjusted based on an eye image as an original image to obtain an adjusted image, and are transformed to obtain a new image, the initial neural network model is trained through a training set constructed according to the adjusted image and the new image to obtain a trained neural network model, and when prediction is performed, the eye image to be predicted containing eyes is input into the trained neural network model to correspondingly obtain a judgment result of the category which may be the phoenix eyes, the triangular eyes, the willow leaf-shaped eyes, the fox eyes or the apricot-shaped eyes. In this embodiment, the recognition of the shapes of the eyes in the eye image is an example of one way in which the dimensions for classifying the objects contained in the image may be external features presented by the objects in appearance.

In another embodiment, if the objects to be classified are the hands of a person, the categories of the objects may include four categories of hands in different shapes, including: square hands, grid hands, conical hands and pointed hands; and the corresponding original image is a hand image. Based on the same technical concept as described in the embodiment of FIG. 7 or FIG. 8, a single neural network model or a combined neural network model can be constructed as an initial neural network model, display parameters are adjusted based on the hand image as an original image to obtain an adjusted image, and are transformed to obtain a new image, the initial neural network model is trained through a training set constructed according to the adjusted image and the new image to obtain a trained neural network model, and during prediction, the hand image to be predicted including hands is input into the trained neural network model to correspondingly obtain a judgment result of the category which may be the square hands, the grid hands, the conical hands or the pointed hands. In the embodiment, the recognition of the shapes of the hands in the hand image is an example of another way in which the dimensions for classifying the objects contained in the image can be external features present in appearance, and the judgment of the hand shape can also be mapped to the judgment of internal features such as personality or habits of an individual, for example, a person with square hands is generally considered to be rational in character and high in working ability and have leadership; and a person with conical hands is generally considered to be emotional, talented and tactical.

In one embodiment, under the technical concept disclosed by the embodiment of the application, the original image can also be other images that contain other objects need to be classified and few categories. A new image is obtained by adjusting the original image and transforming display parameters of the original image according to a distribution condition to be satisfied by the distribution of the display parameter of the original image, a training set for training a neural network model is constructed based on the original image and the new image, and under the condition that the number of training samples is small, more training sets are formed by the original image and the new image to train the neural network model, so that sufficient classification dimensions can be obtained and classification precision can be ensured; therefore, the method for classifying the image according to the embodiment of the application can be suitable for the classification of objects in a wider range, and has higher practicability.

The method for classifying the image according to the embodiment of the application can be implemented on a terminal side or a server side, and in terms of the hardware structure of the computer device, referring to FIG. 10, it is an alternative hardware structure diagram of the computer device 100 according to the embodiment of the application, and the computer device 100 can be a mobile phone, a computer device, a tablet device, personal digital processing, a medical device and the like. The computer device 100 includes: at least one processor 101, a memory 102, at least one network interface 104, and a user interface 106. The various components in the computer device are coupled together by a bus system 105. In one embodiment, the bus system 105 is used to enable connection communication between the components. The bus system 105 includes a power bus, a control bus and a status signal bus in addition to a data bus. However, for clarity of illustration, the various buses are labeled as bus systems in FIG. 10.

The user interface 106 may include a display, a keyboard, a mouse, a trackball, a click wheel, keys, buttons, a touch pad, or a touch screen, etc.

In one embodiment, the memory 102 may be a volatile memory or nonvolatile memory, and may include both volatile and nonvolatile memory. The nonvolatile memory may be a read only memory (ROM), a programmable read-only memory (PROM), which serves as an external cache. By way of illustration and not limitation, many forms of RAM are available, such as a static random access memory (SRAM) and a synchronous static random access memory (SSRAM). The memories described in embodiments of the present application are intended to include, but are not limited to, these and any other suitable categories of memories.

The memory 102 in the embodiments of the present application is used to store various categories of data to support the operation of the computer device 100. Examples of such data include: any executable program for operating on the computer device 100, such as an operating system 1021 and an application 1022; an original image; and a new image obtained by transforming the original image, and the like; and the operating system 1021 including various system programs, such as a framework layer, a core library layer, a driver layer, etc., for implementing various underlying services and processing hardware-based tasks. The application 1022 may include various applications, such as a media player, a browser, etc., for implementing various application services. The method for classifying the image according to the embodiment of the present application may be included in the application 1022.

The method disclosed in the embodiment of the present application described above may be applied to, or implemented by, the processor 101. The processor 101 may be an integrated circuit chip having signal processing capabilities. In implementation, the steps of the method described above may be performed by integrated logic circuitry in hardware or instructions in software within the processor 101. The processor 101 described above may be a general purpose processor, a digital signal processor (DSP), or other programmable logic device, discrete gate or transistor logic device, discrete hardware components, etc. The processor 101 may implement or execute the methods, steps, and logic blocks disclosed in embodiments of the present application. The general purpose processor 101 may be a microprocessor or any conventional processor or the like. In combination with the steps of the method for classifying the image according to the embodiment of the application, the steps can be directly implemented by executing a hardware decoding processor or by combining hardware and software modules in the decoding processor. The software module may be located in a storage medium located in a memory, the processor reading the information in the memory and, in combination with its hardware, completing the steps of the afore mentioned method.

In an exemplary embodiment, the computer device 100 may be implemented by one or more application specific integrated circuits (ASICs), DSPs, programmable logic devices (PLDs) and complex programmable logic devices (CPLDs) for executing the foregoing methods.

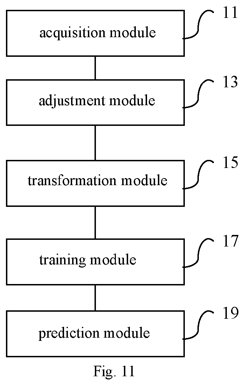

In an exemplary embodiment, referring to FIG. 11, it is a structural schematic diagram of a computer device provided by an embodiment of the present application. The computer device includes: an acquisition module 11, configured to obtain an original image and a category of an object included in the original image; an adjustment module 13, configured to adjust a display parameter of the original image to satisfy a value condition, and obtain an adjusted image; a transformation module 15, configured to transform the display parameter of the original image according to a distribution condition to be satisfied by a distribution of the display parameter, and obtain a new image; a training module 17, configured to train a neural network model according to a training set and the category of the object, wherein the training set is constructed by the adjusted image and the new image; and a prediction module 19, configured to obtain an image to be predicted from a terminal, determine a category of an object included in the image to be predicted based on the trained neural network model, and send the category of the object to the terminal.

In one embodiment, the training module 17 includes an initialization unit and a single model training unit, wherein the initialization unit is configured to initialize a neural network model; and the single model training unit is configured to input images included in the training set and the category of the object into the neural network model, perform iterative training until a loss function of the neural network model satisfies a convergence condition; and obtain a single neural network model for classifying the image to be predicted.

The computer device further comprises a loss function determination module, which is configured to combine a K loss function and a multi-classified logarithmic loss function according to a preset proportion to obtain the loss function of the neural network model.

In another embodiment, the training module 17 includes an initialization unit, a combination unit and a combination model training unit, wherein the initialization unit is configured to initialize a neural network model; the combination unit is configured to according to at least two objects contained in the original image, initialize a concatenation layer, a full-connection layer and classification layers corresponding to the at least two objects, which are sequentially connected with the neural network model, and obtain a combined neural network model for classifying the image to be predicted; and the combined model training unit is configured to input images included in the training set and the categories of the at least two objects into the combined neural network model, and perform iterative training until a loss function satisfies a convergence condition.

In an embodiment, the prediction module 19 is specifically configured to in the single neural network model, extract an image feature from the image to be predicted, and perform down-sampling on the extracted image feature; and map the down-sampled feature to probabilities that the object belongs to different categories.

In another embodiment, the prediction module 19 is specifically configured to in the combined neural network model, utilize the combined neural network model to extract image features from the image to be predicted which includes at least two objects; cascade the extracted image features and perform down-sampling on the cascaded image features; and map the down-sampled image features to probabilities that each of the at least two objects belong to different categories.

In one embodiment, the adjustment module 13 includes a detection unit and an adjustment unit, wherein the detection unit is configured to detect imaging regions of objects included in the original image; and the adjustment unit is configured to adjust the size of the original image until the sizes of the imaging regions of the objects included in the original image are consistent.

In another embodiment, the adjustment module 13 includes an enhancement unit, configured to perform image enhancement processing on each color channel of the original image based on a recognition degree that the original image needs to satisfy.

In yet another embodiment, the adjustment module 13 includes a cutting unit and a size unit, wherein the cutting unit is configured to cut a non-imaging region of the object in the original image; and the size unit is configured to adjust the cut image to conform to a preset size.

The adjustment module 13 may simultaneously include a detection unit, an adjustment unit, an enhancement unit, a cutting unit, and a size unit. The detection unit is configured to detect imaging regions of objects included in the original image; the adjustment unit is configured to adjust the size of the original image until the sizes of the imaging regions of the objects included in the original image are consistent; the enhancement unit is configured to perform image enhancement processing on each color channel of the original image based on a recognition degree that the original image needs to satisfy; the cutting unit is configured to cut a non-imaging region of the object in the original image; and the size unit is configured to adjust the cut image to conform to a preset size.

In one embodiment, the transformation module 15 includes a determination unit and a transformation unit, wherein the determination unit is configured to according to a value space wherein at least one category of the display parameter of the original image is located, and a distribution condition that is satisfied in the value space, determine a missing display parameter when comparing the display parameter of the original image with the distribution condition; and the transformation unit is configured to transform the display parameters of the original image to the missing display parameters to obtain the new image.

It should be noted that the computer device provided by the above-described embodiment is exemplified only by the division of the above-described program modules when performing image classification, and in practice, the above-described processing distribution may be performed by different program modules according to needs, i.e., dividing the internal structure of the device into different program modules to perform all or part of the above-described processing. In addition, the computer device according to the embodiment belongs to the same concept as the method for classifying an image of the embodiment, and the specific implementation process thereof is detailed in the method embodiment and will not be described in detail here.

In an exemplary embodiment, an embodiment of the present application also provides a readable storage medium, such as a memory including executable programs executable by a processor to execute the steps of the above-mentioned method. The readable storage medium may be a memory such as FRAM, ROM, PROM, EPROM, EEPROM, Flash Memory, magnetic surface memory, optical disk, or CD-ROM, and may also be various devices including one or any combination of the above memories, such as a mobile phone, a computer device, a tablet devices, a personal digital assistant, a medical device, etc.

An embodiment of the application also provides a computer device, including a processor and a memory, the memory storing computer readable instructions, when the computer readable instructions are executed by the processor, the processor executing the following steps of: obtaining an original image and a category of an object included in the original image; adjusting a display parameter of the original image to satisfy a value condition, and obtaining an adjusted image; transforming the display parameter of the original image according to a distribution condition to be satisfied by a distribution of the display parameter, and obtaining a new image; training a neural network model according to a training set and the category of the object, wherein the training set is constructed by the adjusted image and the new image; and obtaining an image to be predicted from a terminal, determining a category of an object included in the image to be predicted based on the trained neural network model, and sending the category of the object to the terminal.

The processor is further used to execute the following operation: when the computer program runs, the training the neural network model, including: initializing the neural network model; and inputting images included in the training set and the category of the object into the neural network model, performing iterative training until a loss function of the neural network model satisfies a convergence condition; and obtaining a single neural network model for classifying the image to be predicted.

The processor is further used to execute the following operation: when the computer program runs, combining a K loss function and a multi-classified logarithmic loss function according to a preset proportion to obtain the loss function of the neural network model.

The processor is further used to execute the following operation: when the computer program runs, training the neural network model, including: initializing the neural network model; according to at least two objects contained in the original image, initializing a concatenation layer, a full-connection layer and classification layers corresponding to the at least two objects, which are sequentially connected with the neural network model, and obtaining a combined neural network model for classifying the image to be predicted; and inputting images included in the training set and the categories of the at least two objects into the combined neural network model, and performing iterative training until a loss function satisfies a convergence condition.

The processor is further used to execute the following operation: when the computer program runs, determining the category of the object included in the image to be predicted based on the trained neural network model, including: in the single neural network model, extracting an image feature from the image to be predicted, and performing down-sampling on the extracted image feature; and mapping the down-sampled feature to probabilities that the object belongs to different categories.

The processor is further used to execute the following operation: when the computer program runs, judging the categories of the objects included in the image to be predicted based on a trained neural network mode, including: in the combined neural network model, utilizing the combined neural network model to extract image features from the image to be predicted which includes at least two objects; cascading the extracted image features and performing down-sampling on the cascaded image features; and mapping the down-sampled image features to probabilities that each of the at least two objects belong to different categories.

The processor is further used to execute the following operation: when the computer program runs, adjusting the display parameter of the original image to satisfy the value condition, including: detecting imaging regions of objects included in the original image; and adjusting the size of the original image until the sizes of the imaging regions of the objects included in the original image are consistent.

The processor is further used to execute the following operation: when the computer program runs, adjusting the display parameter of the original image to satisfy the value condition, including: performing image enhancement processing on each color channel of the original image based on a recognition degree that the original image needs to satisfy.

The processor is further used to execute the following operation: when the computer program runs, adjusting the display parameter of the original image to satisfy the value condition, including: cutting a non-imaging region of the object in the original image; and adjusting the cut image to conform to a preset size.

The processor is further used to execute the following operation: when the computer program runs, transforming the display parameter of the original image according to a distribution condition to be satisfied by the distribution of the display parameter, and obtaining a new image, including: according to a value space wherein at least one category of the display parameter of the original image is located, and a distribution condition that is satisfied in the value space, determining a missing display parameter when comparing the display parameter of the original image with the distribution condition; and transforming the display parameter of the original image to the missing display parameters to obtain the new image.

As another alternative embodiment, the computer device may be the server shown in FIG. 1, including a processor, an internal memory, a network interface, and a nonvolatile storage medium that are connected by a system bus. The processor is configured to realize a calculation function and a function of controlling the operation of the server, and is configured to execute the method for classifying the image according to the embodiment of the application. The nonvolatile storage medium stores an operating system, a database, and a computer device for implementing the method for classifying the image according to the embodiment of the present application. The network interface is used to connect a terminal.

## Claims

1. A method for classifying left and right eye images, carried out by a computer device comprising at least a memory and a processor, the method comprising:
obtaining (S21) an original eye fundus image of a left eye and a category of the left eye contained in the original eye fundus image;
obtaining (S21) an original eye fundus image of a right eye and a category of the right eye contained in the original eye fundus image;
for each of the original eye fundus image of the left eye and the original eye fundus image of the right eye, performing the following:
adjusting (S22) a display parameter of the original eye fundus image to satisfy a value condition, to obtain an adjusted eye fundus image;
transforming (S23) the display parameter of the original eye fundus image according to a distribution condition to be satisfied by the distribution of the display parameter, to obtain a new eye fundus image;
constructing (S24) a combined neural network model, comprising a pre-trained neural network to generate feature vectors from the left eye image and the right eye image, concatenate these feature vectors according to a concatenation layer, followed by a full-connection layer, and a classification layer corresponding to the left eyeball and a classification layer corresponding to the right eyeball;
training (S25) the combined neural network model according to a training set, the category of the left eye, and the category of the right eye, wherein
the training set is constructed by the adjusted eye fundus image of the left eye, the new eye fundus image of the left eye, the adjusted eye fundus image of the right eye, and the new eye fundus image of the right eye;
images included in the training set, the category of the left eye, the category of the right eye are put into the combined neural network model, and multiple iterations are performed until a loss function satisfies a convergence condition, to obtain a trained neural network model; and
obtaining an eye fundus image of a left eye and an eye fundus image of a right eye from a terminal, determining (S26) a classification result of the left eyeball and a classification result of the right eyeball based on the trained neural network model, and sending the classification result of the left eyeball and the classification result of the right eyeball to the terminal.

2. The method according to claim 1, wherein determining a classification result of a left eyeball and a classification result of a right eyeball based on the trained neural network model comprises:
utilizing the trained neural network model to extract a first image feature vector from the eye fundus image of the left eye and extract a second image feature vector from the eye fundus image of the right eye;
cascading the first image feature vector and the second image feature vector, and performing down-sampling on the cascaded image feature vector for dimension reduction;
inputting the down-sampled image feature vector to the classification layer corresponding to the left eyeball to obtain the classification result of the left eyeball; and
inputting the down-sampled image feature vector to the classification layer corresponding to the right eyeball to obtain the classification result of the right eyeball.

3. A computer device (100), comprising at least a processor (101) and a memory (102), the memory (102) storing computer readable instructions, when the computer readable instructions are executed by the processor (101), the processor (101) executing the method claimed in claim 1 or 2.

4. A non-volatile computer readable storage medium, storing computer readable instructions, when the computer readable instructions are executed by one or more processors, the one or more processors executing the method claimed in claim 1 or 2.

## Patentansprüche

1. Verfahren zum Klassifizieren eines linken und eines rechten Augenbildes, das von einer Computervorrichtung umgesetzt wird, die mindestens einen Speicher und einen Prozessor umfasst, wobei das Verfahren Folgendes umfasst:
Erhalten (S21) eines Originalaugenhintergrundbildes eines linken Auges und einer Kategorie des linken Auges, die im Originalaugenhintergrundbild enthalten ist;
Erhalten (S21) eines Originalaugenhintergrundbildes eines rechten Auges und einer Kategorie des rechten Auges, die im Originalaugenhintergrundbild enthalten ist;
Durchführen von Folgendem für jedes des Originalaugenhintergrundbildes des linken Auges und des Originalaugenhintergrundbildes des rechten Auges:
Anpassen (S22) eines Anzeigeparameters des Originalaugenhintergrundbildes, um eine Wertbedingung zu erfüllen, um ein angepasstes Augenhintergrundbild zu erhalten;
Umwandeln (S23) des Anzeigeparameters des Originalaugenhintergrundbildes gemäß einer Verteilungsbedingung, die von der Verteilung des Anzeigeparameters zu erfüllen ist, um ein neues Augenhintergrundbild zu erhalten;
Konstruieren (S24) eines kombinierten neuronalen Netzwerkmodells, das ein vortrainiertes neuronales Netzwerk umfasst, um aus dem linken Augenbild und dem rechten Augenbild Merkmalsvektoren zu erzeugen, diese Merkmalsvektoren gemäß einer Verkettungsschicht, gefolgt von einer Vollverbindungsschicht und einer Klassifizierungsschicht, die dem linken Augapfel entspricht, und einer Klassifizierungsschicht, die dem rechten Augapfel entspricht, zu verketten;
Trainieren (S25) des kombinierten neuronalen Netzwerkmodells gemäß einem Trainingssatz, der Kategorie des linken Auges und der Kategorie des rechten Auges, wobei
der Trainingssatz durch das Augenhintergrundbild des linken Auges, das neue Augenhintergrundbild des linken Auges, das angepasste Augenhintergrundbild des rechten Auges und das neue Augenhintergrundbild des rechten Auges konstruiert wird;
Bilder, die im Trainingssatz, in der Kategorie des linken Auges, der Kategorie des rechten Auges beinhaltet sind, werden in das kombinierte neuronale Netzwerkmodell eingegeben und mehrere Wiederholungen werden durchgeführt, bis eine Verlustfunktion eine Konvergenzbedingung erfüllt, um ein trainiertes neuronales Netzwerkmodell zu erhalten; und
Erhalten eines Augenhintergrundbildes eines linken Auges und eines Augenhintergrundbildes eines rechten Auges von einem Endgerät, Bestimmen (S26) eines Klassifizierungsergebnisses des linken Augapfels und eines Klassifizierungsergebnisses des rechten Augapfels auf Basis des trainierten neuronalen Netzwerkmodells und Senden des Klassifizierungsergebnisses des linken Augapfels und des Klassifizierungsergebnisses des rechten Augapfels an das Endgerät.

2. Verfahren nach Anspruch 1, wobei das Bestimmen eines Klassifizierungsergebnisses eines linken Augapfels und eines Klassifizierungsergebnisses eines rechten Augapfels auf Basis des trainierten neuronalen Netzwerkmodells Folgendes umfasst:
Nutzen des trainierten neuronalen Netzwerkmodells, um einen ersten Bildmerkmalsvektor aus dem Augenhintergrundbild des linken Auges zu extrahieren und einen zweiten Bildmerkmalsvektor aus dem Augenhintergrundbild des rechten Auges zu extrahieren;
Kaskadieren des ersten Bildmerkmalsvektors und des zweiten Bildmerkmalsvektors und Durchführen einer Abwärtsabtastung am kaskadierten Bildmerkmalsvektor für eine Dimensionsreduzierung;
Eingeben des abwärts abgetasteten Bildmerkmalsvektors in die Klassifizierungsschicht, die dem linken Augapfel entspricht, um das Klassifizierungsergebnis des linken Augapfels zu erhalten; und
Eingeben des abwärts abgetasteten Bildmerkmalsvektors in die Klassifizierungsschicht, die dem rechten Augapfel entspricht, um das Klassifizierungsergebnis des rechten Augapfels zu erhalten.

3. Computervorrichtung (100), die mindestens einen Prozessor (101) und einen Speicher (102) umfasst, wobei im Speicher (102) computerlesbare Anweisungen gespeichert sind, wobei, wenn die computerlesbaren Anweisungen vom Prozessor (101) ausgeführt werden, der Prozessor (101) das wie in Anspruch 1 oder 2 beanspruchte Verfahren ausführt.

4. Nichtflüchtiges computerlesbares Speichermedium, auf dem computerlesbare Anweisungen gespeichert sind, wobei, wenn die computerlesbaren Anweisungen von einem oder mehreren Prozessoren ausgeführt werden, der eine oder die mehreren Prozessoren das in Anspruch 1 oder 2 beanspruchte Verfahren ausführen.

## Revendications

1. Procédé de classification d'images de l'œil gauche et de l'œil droit, mis en œuvre par un dispositif informatique comprenant au moins une mémoire et un processeur, le procédé comprenant :
l'obtention (S21) d'une image du fond de l'œil originale d'un œil gauche et d'une catégorie de l'œil gauche contenue dans l'image du fond de l'œil originale ;
l'obtention (S21) d'une image du fond de l'œil originale d'un œil droit et d'une catégorie de l'œil droit contenue dans l'image du fond de l'œil originale ;
pour chacune parmi l'image du fond de l'œil originale de l'œil gauche et l'image du fond de l'œil originale de l'œil droit, la réalisation de ce qui suit :
ajuster (S22) un paramètre d'affichage de l'image du fond de l'œil originale pour satisfaire à une condition de valeur afin d'obtenir une image du fond de l'œil ajustée ;
transformer (S23) le paramètre d'affichage de l'image du fond de l'œil originale selon une condition de distribution à satisfaire par la distribution du paramètre d'affichage afin d'obtenir une nouvelle image du fond de l'œil ;
construire (S24) un modèle de réseau neuronal combiné comprenant un réseau neuronal pré-entraîné pour générer des vecteurs de caractéristiques à partir de l'image d'œil gauche et de l'image d'œil droit, concaténer ces vecteurs de caractéristiques selon une couche de concaténation suivie d'une couche de connexion complète, et une couche de classification correspondant au globe oculaire gauche et une couche de classification correspondant au globe oculaire droit ;
entrainer (S25) le modèle de réseau neuronal combiné selon un ensemble d'entraînement, la catégorie de l'œil gauche et la catégorie de l'œil droit, dans lequel
l'ensemble d'entraînement est construit par l'image du fond de l'œil ajustée de l'œil gauche, de la nouvelle image du fond de l'œil de l'œil gauche, de l'image du fond de l'œil ajustée de l'œil droit et de la nouvelle image du fond de l'œil de l'œil droit ;
les images incluses dans l'ensemble d'entraînement, la catégorie de l'œil gauche et la catégorie de l'œil droit sont mises dans le modèle de réseau neuronal combiné, et des itérations multiples sont effectuées jusqu'à ce qu'une fonction de perte satisfasse à une condition de convergence, afin d'obtenir un modèle de réseau neuronal entraîné ; et
obtenir une image du fond de l'œil d'un œil gauche et une image du fond de l'œil d'un œil droit à partir d'un terminal, déterminer (S26) un résultat de classification du globe oculaire gauche et un résultat de classification du globe oculaire droit sur la base du modèle de réseau neuronal entraîné, et envoyer le résultat de classification du globe oculaire gauche et le résultat de classification du globe oculaire droit au terminal.

2. Procédé selon la revendication 1, dans lequel la détermination d'un résultat de classification d'un globe oculaire gauche et d'un résultat de classification d'un globe oculaire droit sur la base du modèle de réseau neuronal entraîné comprend ;
l'utilisation du modèle de réseau neuronal entraîné pour extraire un premier vecteur de caractéristique d'image à partir de l'image du fond de l'œil de l'œil gauche et extraire un deuxième vecteur de caractéristique d'image à partir de l'image du fond de l'œil de l'œil droit ;
la mise en cascade du premier vecteur de caractéristique d'image et du deuxième vecteur de caractéristique d'image, et la réalisation d'un sous-échantillonnage sur le vecteur de caractéristique d'image mis en cascade pour une réduction de dimension ;
l'entrée du vecteur de caractéristique d'image sous-échantillonné dans la couche de classification correspondant au globe oculaire gauche afin d'obtenir le résultat de classification du globe oculaire gauche ; et
l'entrée du vecteur de caractéristique d'image sous-échantillonné dans la couche de classification correspondant au globe oculaire droit afin d'obtenir le résultat de classification du globe oculaire droit.

3. Dispositif informatique (100), comprenant au moins un processeur (101) et une mémoire (102), la mémoire (102) stockant des instructions lisibles par ordinateur, lorsque les instructions lisibles par ordinateur sont exécutées par le processeur (101), le processeur (101) exécutant le procédé revendiqué dans la revendication 1 ou 2.

4. Support de stockage non volatil lisible par ordinateur stockant des instructions lisibles par ordinateur, lorsque les instructions lisibles par ordinateur sont exécutées par un ou plusieurs processeurs, les un ou plusieurs processeurs exécutant le procédé revendiqué dans la revendication 1 ou 2.
